# FASCICULE DE BREVET EUROPEEN

(11) **EP 4 341 080 B1**
(45) Date de publication et mention de la délivrance du brevet: **11.11.2026**
(21) Numéro de dépôt: 22731735.1
(22) Date de dépôt: 16.05.2022
(51) Int. Cl.: B29D 30/06

(54) **MOULE ET PROCÉDÉ DE CUISSON SANS MEMBRANE OPTIMISÉS POUR PNEUMATIQUE**
OPTIMIERTES BLASENFREIES HÄRTUNGSVERFAHREN UND FORM FÜR EINEN REIFEN
OPTIMIZED BLADDER-FREE CURING METHOD AND MOULD FOR A TYRE

(30) Priorité: 19.05.2021 FR 2105205
(43) Date de publication de la demande: 27.03.2024
(73) Titulaire: COMPAGNIE GENERALE DES ETABLISSEMENTS MICHELIN, 63000 Clermont-Ferrand (FR)
(72) Inventeur: QUILLON, Maxime, 63040 CLERMONT-FERRAND Cedex 9 (FR); DESCHAUX, Stéphane, 63040 CLERMONT-FERRAND Cedex 9 (FR); BINDA, Yann, 63040 CLERMONT-FERRAND Cedex 9 (FR); GROSPIED, Maxime, 63040 CLERMONT-FERRAND Cedex 9 (FR); DESMERGER, Jeremy, 63040 CLERMONT-FERRAND Cedex 9 (FR); BOYER, Sébastien, 63040 CLERMONT-FERRAND Cedex 9 (FR)
(74) Mandataire: M.F.P. Michelin
(86) Numéro de dépôt international: PCT/FR2022/050926
(87) Numéro de publication internationale: WO 2022/243631

(56) Documents cités:
- EP-A1- 0 119 753
- EP-A1- 0 368 546
- WO-A1-2016/173570
- FR-A1- 2 028 123

## Description

L'invention se situe dans le domaine de la fabrication des pneumatiques pour véhicule et, plus particulièrement, dans le domaine de la cuisson desdits pneumatiques.

La fabrication d'un pneumatique comprend une étape de cuisson pendant laquelle une ébauche crue de pneumatique est vulcanisée et moulée en vue d'obtenir un pneumatique de caractéristiques mécaniques, de géométrie et d'aspect voulus. La cuisson s'effectue dans un moule de cuisson pour pneumatique comprenant des ensembles supérieur et inférieur de moulage, mobiles axialement l'un par rapport à l'autre. Les ensembles de moulage comprennent des éléments de moulage définissant ensemble une surface interne de moulage du pneumatique. En particulier, chaque ensemble de moulage comprend une coquille de moulage d'un flanc du pneumatique, et un anneau de moulage d'un bourrelet du pneumatique.

Généralement, l'ébauche de pneumatique est introduite dans le moule de cuisson, puis, une membrane de cuisson extensible disposée entre les bourrelets du pneumatique est gonflée à l'aide d'un gaz sous pression. La membrane de cuisson se déploie à l'intérieur de l'ébauche de pneumatique, puis, s'applique contre sa surface interne. La membrane de cuisson permet ainsi la préhension de l'ébauche de pneumatique avant la fermeture du moule de cuisson, et le pressage uniforme de l'ébauche de pneumatique contre la surface interne de moulage. La membrane de cuisson forme également une barrière étanche entre l'ébauche de pneumatique et le gaz sous pression.

Dans le cas où, par exemple, l'ébauche de pneumatique comporte déjà une couche interne formant une barrière étanche, l'étape de cuisson peut être réalisée sans membrane de cuisson. Toutefois, il s'avère nécessaire de former un contact étanche entre chaque anneau de moulage et le bourrelet de l'ébauche de pneumatique qui lui est associé.

Le document EP0119753A1 décrit une presse de cuisson sans membrane dans laquelle un dispositif vient plaquer les bourrelets de l'ébauche de pneumatique contre leurs anneaux de moulage respectifs à l'aide de doigts articulés, de manière à former un contact étanche. Chaque anneau de moulage est fixé à un support central, chaque support central étant mobile axialement par rapport à la coquille du même ensemble de moulage, et par rapport à l'autre ensemble de moulage. Toutefois, un tel dispositif de plaquage est complexe et couteux. Il en va de même pour les moyens d'entrainement assurant la mobilité des éléments de moulage des différents ensembles les uns par rapport aux autres.

Une autre solution de moule de cuisson sans membrane pour pneumatique a été décrite dans le document EP0368546. Ce moule utilise plusieurs actionneurs qui déplacent axialement en sens contraires des mâchoires qui enserrent les bourrelets du pneumatique. La solution décrite dans ce document fait appel à plusieurs actionneurs et à des dispositifs complexes et, de ce fait, présente les mêmes inconvénients que celle du document précédent.

Un objectif de l'invention est de remédier aux inconvénients des documents précités en proposant un moule de cuisson d'une ébauche d'un pneumatique comprenant un ensemble supérieur de moulage et un ensemble inférieur de moulage, chaque ensemble de moulage comportant une coquille de moulage d'un flanc du pneumatique, un anneau de moulage d'un bourrelet du pneumatique, un support central mobile axialement sur lequel l'anneau est fixé, et un actionneur axial du support central.

Le moule comprend, en outre, une source de gaz sous pression apte à mettre sous pression l'ébauche de pneumatique dès que les bourrelets de l'ébauche de pneumatique sont sensiblement en contact avec leurs anneaux de moulage.

Le moule est caractérisé en ce que la source de gaz sous pression comporte des moyens de réglage de la pression à l'intérieur de l'ébauche de pneumatique, et en ce que l'actionneur axial comporte des moyens de limitation de l'effort s'exerçant sur ledit actionneur, de manière que, lorsque l'effort exercé par la pression à l'intérieur de l'ébauche de pneumatique sur l'actionneur axial est inférieur à un effort limite prédéfini, l'actionneur axial est immobile, et, lorsque l'effort exercé par la pression à l'intérieur de l'ébauche de pneumatique sur l'actionneur axial est supérieur à l'effort limite prédéfini, l'actionneur axial se ramasse axialement.

Par « coquille supérieure » ou « anneau supérieur », on entend la coquille ou l'anneau de l'ensemble supérieur de moulage.

Par « coquille inférieure » ou « anneau inférieur », on entend la coquille ou l'anneau de l'ensemble inférieur de moulage.

On éloigne axialement l'anneau inférieur de la coquille inférieure vers l'intérieur du moule, afin que le flanc inférieur de l'ébauche de pneumatique ne prenne pas appui sur la coquille inférieure.

On introduit ensuite une ébauche de pneumatique dans le moule, le bourrelet inférieur de l'ébauche de pneumatique prenant appui sur l'anneau inférieur.

On éloigne axialement l'anneau supérieur de la coquille supérieure vers l'intérieur du moule, afin que le flanc supérieur de l'ébauche de pneumatique ne prenne pas appui sur la coquille supérieure, l'anneau supérieur prenant appui sur le bourrelet supérieur de l'ébauche de pneumatique.

L'absence de contact entre les flancs de l'ébauche de pneumatique et les coquilles qui leur sont associées permet d'éviter le fléchissement desdits flancs, puis la perte de contact entre les bourrelets et leurs anneaux de moulage.

L'appui simple du bourrelet inférieur contre l'anneau inférieur, et de l'anneau supérieur contre le bourrelet supérieur, n'est pas suffisant pour former un contact étanche. On dit alors que les bourrelets de l'ébauche de pneumatique sont sensiblement en contact avec leurs anneaux de moulage.

On règle la pression de gaz à l'intérieur de l'ébauche de pneumatique, de sorte que les bourrelets de l'ébauche de pneumatique soient suffisamment plaqués contre les anneaux qui leur sont associés afin de former un contact étanche.

De préférence, on règle également la pression de gaz à l'intérieur de l'ébauche de pneumatique, de sorte que les flancs de l'ébauche de pneumatique soient suffisamment rigides et galbés pour permettre aux coquilles de prendre appui dessus sans les racler ou les déformer.

De préférence, la source de gaz sous pression comporte des moyens de réglage du débit de gaz sous pression alimentant l'intérieur de l'ébauche de pneumatique.

On règle le débit de gaz sous pression, de sorte que le débit de gaz soit suffisamment important pour permettre la mise sous pression rapide de l'ébauche de pneumatique, et ainsi, la formation du contact étanche.

On alimente ensuite en gaz sous pression l'intérieur de l'ébauche de pneumatique de manière à mettre sous pression rapidement l'ébauche de pneumatique, et à former un contact étanche. Chaque bourrelet de l'ébauche de pneumatique est alors plaqué et en contact annulaire contre son anneau de moulage.

De préférence, la surface de contact entre un bourrelet et un anneau est prévue pour permettre le centrage et/ou le frettage du bourrelet plaqué contre l'anneau qui lui est associé, l'ébauche de pneumatique étant mise sous pression. A titre d'exemples, la surface de contact entre le bourrelet et l'anneau est sensiblement tronconique et/ou incurvée.

Une fois que les anneaux de chaque ensemble de moulage sont en contact étanche avec les bourrelets de l'ébauche de pneumatique qui leur sont associés, on rapproche axialement l'anneau inférieur de la coquille inférieure, et l'anneau supérieur de la coquille supérieure.

Lorsqu'on rapproche axialement les anneaux des coquilles qui leur sont associés, il est nécessaire que la pression à l'intérieur de l'ébauche de pneumatique soit suffisante pour que le contact étanche entre les bourrelets de l'ébauche de pneumatique et leurs anneaux de moulage soit maintenus.

On prédéfinit alors une pression permettant le maintien du contact étanche entre les bourrelets de l'ébauche de pneumatique et leurs anneaux de moulage, lorsqu'on rapproche axialement les anneaux des coquilles qui leur sont associés.

La pression à l'intérieur de l'ébauche de pneumatique exerce un effort sur l'actionneur axial de chaque ensemble, via l'anneau et le support central auxquels il est lié. Ainsi, à la pression à l'intérieur de l'ébauche de pneumatique correspond un effort s'exerçant sur l'actionneur axial.

On prédéfinit ainsi l'effort limite s'exerçant sur l'actionneur axial correspondant à la pression à l'intérieur de l'ébauche de pneumatique suffisante pour que le contact étanche entre les bourrelets de l'ébauche de pneumatique et leurs anneaux de moulage soit maintenu.

On règle les moyens de limitation de l'effort s'exerçant sur ledit actionneur à l'effort limite prédéfinie de sorte que, lorsque l'effort exercé par la pression à l'intérieur de l'ébauche de pneumatique sur l'actionneur axial est inférieur à un effort limite prédéfini du limiteur d'effort, l'actionneur axial est immobile, et, lorsque l'effort exercé par la pression à l'intérieur de l'ébauche de pneumatique sur l'actionneur axial est supérieur à l'effort limite prédéfini du limiteur d'effort, l'actionneur axial se ramasse axialement. Par actionneur axial se ramassant axialement, on comprend que l'actionneur axial se déplace jusqu'à ce que l'anneau de moulage du bourrelet vienne au contact de la coquille de moulage du flanc du pneumatique.

Ainsi, le moule de cuisson selon l'invention permet avantageusement d'immobiliser ou de déplacer axialement les anneaux de chaque ensemble de moulage sous l'effet de l'actionneur central et de la pression à l'intérieur de l'ébauche de pneumatique, tout en maintenant le contact étanche entre les bourrelets de l'ébauche de pneumatique et leurs anneaux de moulage.

Avantageusement, le moule comprend un couvercle de l'ensemble supérieur de moulage, la coquille supérieure et/ou l'anneau supérieur étant mobiles axialement par rapport au couvercle sous l'effet de l'actionneur axial supérieur et/ou de la pression à l'intérieur de l'ébauche de pneumatique.

Ainsi, l'actionneur central supérieur permet le déplacement de l'anneau supérieur par rapport à la coquille supérieure, et le déplacement de l'anneau supérieur et de la coquille supérieure par rapport au couvercle.

Une telle construction permet de simplifier et fiabiliser les moyens d'entrainement assurant la mobilité des éléments de moulage des différents ensembles les uns par rapport aux autres.

Avantageusement, le support central supérieur et l'anneau supérieur sont monoblocs.

Une telle construction est plus robuste et permet d'améliorer l'étanchéité à l'intérieur de l'ébauche de pneumatique.

Avantageusement, l'ensemble supérieur comprend une couronne de secteurs de moulage de la bande de roulement du pneumatique, chaque secteur étant relié au couvercle et à la coquille supérieure de manière que, lorsque la coquille supérieure est mobile à rapprochement axial par rapport au couvercle, les secteurs sont mobiles radialement vers l'intérieur du moule, et, lorsque la coquille supérieure est mobile à éloignement axial par rapport au couvercle, les secteurs sont mobiles radialement vers l'extérieur du moule.

L'actionneur central supérieur permettant le déplacement de la coquille supérieur par rapport au couvercle, l'actionneur central supérieur permet ainsi également le déplacement des secteurs.

Une telle construction permet de simplifier et fiabiliser les moyens d'entrainement assurant la mobilité des éléments de moulage de l'ensemble supérieur les uns par rapport aux autres.

Avantageusement, l'anneau d'un ensemble de moulage est mobile à coulissement axial par rapport la coquille dudit ensemble de moulage entre une butée axialement interne de ladite coquille, et une butée axialement externe de ladite coquille.

Avantageusement, la coquille supérieure est mobile à coulissement axial par rapport au couvercle entre une butée axialement interne du couvercle, et une butée axialement externe du couvercle.

Avantageusement, chaque secteur est mobile à coulissement radial par rapport à la coquille supérieure entre une butée radialement interne de la coquille supérieure, et une butée radialement externe du couvercle.

Avantageusement, le moule comprend des moyens électriques de chauffage du gaz sous pression contenu à l'intérieur l'ébauche de pneumatique.

Avantageusement, le moule comprend des moyens de maintien en position axial du bourrelet inférieur du pneumatique.

Ainsi, lors du démoulage du pneumatique, le pneumatique est maintenu sur l'ensemble inférieur.

L'invention a également pour objet un procédé de cuisson d'une ébauche de pneumatique à l'aide du moule de cuisson selon l'invention, dans lequel on règle la pression à l'intérieur de l'ébauche de pneumatique à l'aide des moyens de réglage de la pression à l'intérieur de l'ébauche de pneumatique, et on règle un effort limite s'exerçant sur l'actionneur axial à l'aide des moyens de limitation de l'effort s'exerçant sur ledit actionneur de manière que, lorsque l'effort exercé par la pression à l'intérieur de l'ébauche de pneumatique sur l'actionneur axial est inférieur à l'effort limite prédéfini, l'actionneur axial est immobile, et, lorsque l'effort exercé par la pression à l'intérieur de l'ébauche de pneumatique sur l'actionneur axial est supérieur à l'effort limite prédéfini, l'actionneur axial se ramasse axialement.

L'invention sera mieux comprise grâce à la suite de la description, qui s'appuie sur les figures suivantes :
- la figure 1 est une vue en coupe radiale d'un moule de cuisson de pneumatique selon l'invention ;
- les figures 2 à 9 sont des vues simplifiées en coupe radiale illustrant le moule de cuisson de la figure 1 en diverses positions ;
- la figure 10 est une vue en perspective d'un dispositif de maintien en position axiale du bourrelet inférieur du pneumatique.

Sur les différentes figures, les éléments identiques ou similaires portent la même référence. Leur description n'est donc pas systématiquement reprise.

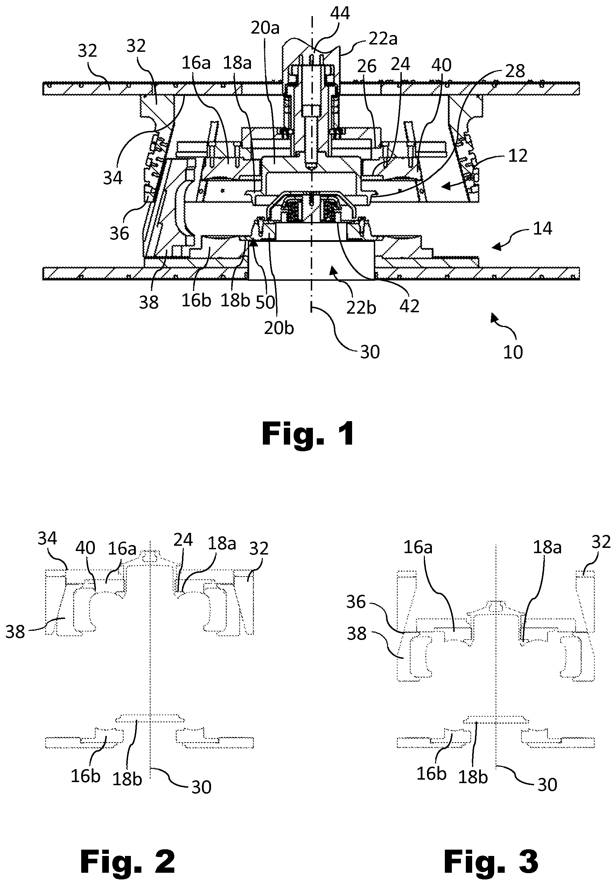

Comme l'illustre la figure 1, l'invention est relative à un moule de cuisson 10 d'une ébauche d'un pneumatique comprenant un ensemble supérieur 12 de moulage et un ensemble inférieur 14 de moulage, chaque ensemble de moulage comportant une coquille 16 de moulage d'un flanc du pneumatique, notamment une coquille supérieure 16a et une coquille inférieure 16b, un anneau 18 de moulage d'un bourrelet du pneumatique, notamment un anneau supérieur 18a et un anneau inférieur 18b, un support central 20 mobile axialement sur lequel l'anneau est fixé, plus particulièrement un support central supérieur 20a et un support central inférieur 20b, et un actionneur axial 22 du support central, plus particulièrement un actionneur supérieur 22a et un actionneur inférieur 22b. L'anneau 18 d'un ensemble de moulage quelconque est mobile à coulissement axial par rapport à la coquille 16 dudit ensemble entre une butée axialement interne 24 formée par ladite coquille, et une butée axialement externe 26 de ladite coquille. Le support central supérieur 20a et l'anneau supérieur 18a sont monoblocs. La surface de contact 28 d'un anneau de moulage avec un bourrelet de l'ébauche de pneumatique est prévue pour permettre le centrage et/ou le frettage du bourrelet plaqué contre l'anneau de moulage qui lui est associé, l'ébauche de pneumatique étant mise sous pression. Dans un mode préféré de réalisation de l'invention, l'ébauche de pneumatique comprend une carcasse de pneu à réchapper comportant une bande de roulement réalisée à base de mélanges élastomériques crus. Dans un autre mode de réalisation, l'ébauche de pneumatique est réalisée à base de mélanges élastomériques crus. A titre d'exemples, la surface de contact entre le bourrelet et l'anneau est sensiblement tronconique et/ou incurvée.

Le moule de cuisson 10 est sensiblement à symétrie de révolution d'axe central 30. L'axe central 30 s'étend verticalement. Dans la suite de la description, « axial » ou « axialement » se rapporte à une direction ou un déplacement parallèle à l'axe central, et « radial » ou « radialement » se rapporte à une direction ou un déplacement perpendiculaire à l'axe central 30.

Le moule 10 comprend un couvercle 32 de l'ensemble supérieur 12 de moulage. Le couvercle est mobile axialement par rapport à un bâti et à l'ensemble inférieur 14 de moulage à l'aide de moyens d'entrainement (non représentés). Le couvercle porte l'ensemble supérieur 12 et le bâti supporte l'ensemble inferieur 14 en position d'ouverture du moule ou, autrement dit, lorsque l'ensemble supérieur 12 ne prend pas appui sur l'ensemble inférieur 14. La coquille supérieure 16a est mobile à coulissement axial par rapport au couvercle 32 entre une butée axialement externe 34 du couvercle, et une butée axialement interne 36 du couvercle.

Le moule 10 est, de préférence, du type « container ». Autrement dit, l'ensemble supérieur 12 comprend une couronne supérieure de secteurs 38 de moulage de la bande de roulement du pneumatique, chaque secteur étant relié au couvercle 32 et à la coquille supérieure 16a de manière que, lorsque la coquille supérieure est mobile à rapprochement axial par rapport au couvercle, les secteurs 38 sont mobiles radialement vers l'intérieur du moule, et, lorsque la coquille supérieure est mobile à éloignement axial par rapport au couvercle, les secteurs 38 sont mobiles radialement vers l'extérieur du moule. Chaque secteur 38 est mobile à coulissement radial par rapport à la coquille supérieure 16a, et mobile à coulissement axial et radial par rapport au couvercle 32, entre une butée radialement interne 40 de la coquille supérieure, et la butée axialement interne 36 du couvercle.

A titre d'exemples, le moule peut également être du type à « deux demi-coquille » dans lequel la surface de moulage de chaque coquille comporte la surface de moulage d'un flanc du pneumatique et d'une partie de la bande de roulement, les deux demi-coquilles se joignant le long d'un contour périphérique en position de fermeture du moule, ou, du type à « couronne inférieure de secteurs » dans lequel l'ensemble inférieur de moulage comporte une couronne inférieure de secteur, chaque secteur étant relié au couvercle et à la coquille inférieure, ou encore, du type à « deux couronnes de demi-secteurs » dans lequel chaque ensemble de moulage comporte une couronne de demi secteurs.

L'actionneur axial supérieur 22a comporte une partie fixe (non représenté) par rapport au couvercle 32 et une partie mobile 44 reliée de différentes manières aux éléments de moulage de l'ensemble supérieur 12, par exemple fixée à l'aide de vis de fixation sur la coquille supérieure 16a. L'anneau supérieur 18a et le support central supérieur 20a sont fixés à la partie mobile 44 de l'actionneur central supérieur 22a de manière que, dès que la partie mobile de l'actionneur central supérieur 22a est actionnée, l'anneau supérieur 18a et le support central supérieur 20a sont mobiles axialement. Lorsque la coquille supérieure 16a est en appui simple sur l'anneau supérieur 18a et libre par ailleurs, la coquille supérieure est mobile axialement avec l'anneau supérieur, et les secteurs 38 sont mobiles à coulissement radial par rapport à la coquille supérieure et à coulissement axial et radial par rapport au couvercle 32. Lorsque la coquille supérieure est en appui simple sur la butée axialement interne 36 du couvercle et libre par ailleurs, l'anneau supérieur 18a est mobile à coulissement axial par rapport à la coquille supérieure 16a. Ainsi, l'actionneur central supérieur permet le déplacement des éléments de moulage de l'ensemble supérieur 12 les uns par rapport aux autres. Ainsi, l'actionneur supérieur 22a permet le déplacement des éléments de moulage entre une position de fermeture et une position d'ouverture de la cavité de moulage, ainsi que le déplacement de l'anneau supérieur 18a et du support central supérieur 20a. Ceci présente l'avantage d'utiliser un seul actionneur pour le mouvement des différents composants du moule de l'invention, ce qui simplifie la construction de l'ensemble. A titre d'exemple, le déplacement des éléments de moulage de l'ensemble inférieur 14 peut être obtenu de manière similaire. De préférence, l'actionneur axial supérieur 22a est un vérin hydraulique et encore plus préférentiellement, l'actionneur axial supérieur 22a est un vérin hydraulique télescopique.

Le moule comprend une source de gaz sous pression (non représenté) apte à mettre sous pression l'ébauche de pneumatique dès que les bourrelets de l'ébauche de pneumatique sont sensiblement en contact avec leurs anneaux 18a, 18b de moulage. A titre d'exemple, la source de gaz sous pression est un réseau de gaz sous pression apte à alimenter en gaz sous pression plusieurs moules de cuisson simultanément. La source de gaz sous pression comporte des moyens de réglage du débit de gaz sous pression alimentant l'intérieur de l'ébauche de pneumatique, et des moyens de réglage de la pression à l'intérieur de l'ébauche de pneumatique. A titre d'exemple, les moyens de réglage du débit et de la pression de gaz prennent la forme d'une vanne dont le temps et l'amplitude d'ouverture varient en fonction du débit et de la pression de gaz voulus. Le gaz sous pression est, de préférence, du diazote.

L'actionneur axial supérieur 22a et/ou inférieur 22b comporte des moyens de limitation de l'effort s'exerçant sur ledit actionneur, de manière que, lorsque l'effort exercé par la pression à l'intérieur de l'ébauche de pneumatique sur l'actionneur axial est inférieur à un effort limite prédéfini, l'actionneur axial est immobile, et, lorsque l'effort exercé par la pression à l'intérieur de l'ébauche de pneumatique sur l'actionneur axial est supérieur à l'effort limite prédéfini, l'actionneur axial se ramasse axialement. Ces moyens de limitation d'effort peuvent prendre la forme d'un limiteur de pression hydraulique monté sur le vérin hydraulique de l'actionneur supérieur 22a et de l'actionneur inférieur 22b.

Le moule comprend des moyens électriques de chauffage 42 du gaz sous pression contenu dans l'ébauche de pneumatique. A titre d'exemple, les moyens de chauffage prennent la forme de résistances électriques associés à des moyens de ventilation du gaz sous pression.

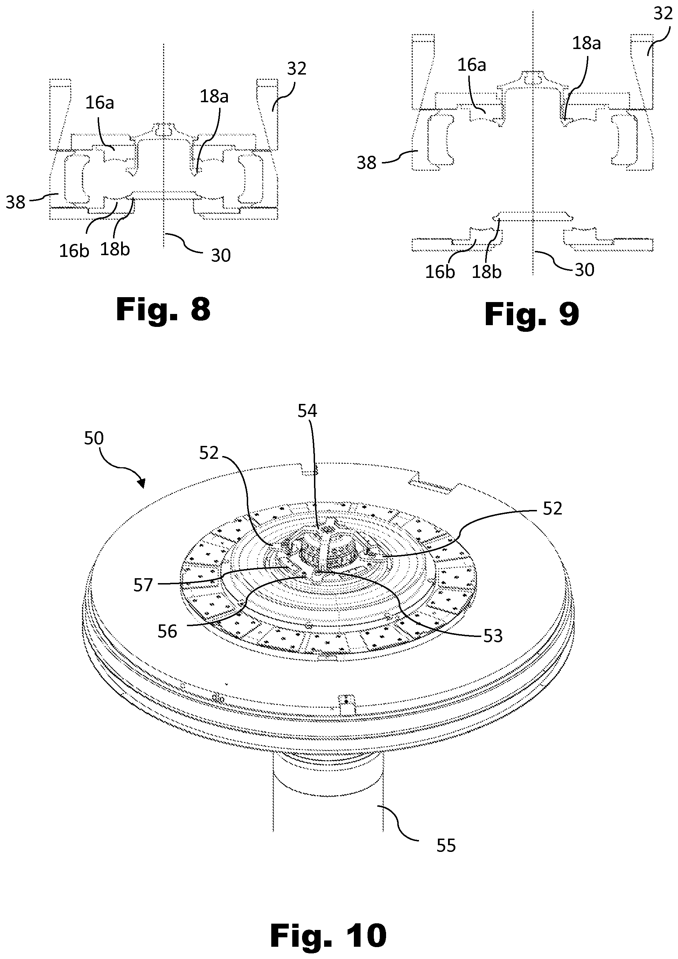

Le moule comprend des moyens de maintien en position axiale du bourrelet inférieur de l'ébauche de pneumatique. Tel que visible à la figure 10, les moyens de maintien en position axiale du bourrelet du pneumatique prennent la forme d'un dispositif de maintien 50 comprenant de doigts articulés 52 mobiles entre une position de retrait, dans laquelle les doigts sont en retrait dans l'espace délimité par le bourrelet inférieur du pneumatique, et une position de maintien dans laquelle les doigts maintiennent le bourrelet inférieur contre l'anneau inférieur 18b. Plus précisément en référence à la figure 10, le dispositif de maintien 50 comprend une pièce centrale 54 en forme d'étoile à quatre bras, chaque bras étant relié par une articulation à l'une des extrémités d'un doigt mobile 52, l'autre extrémité du doigt mobile étant libre et proéminente radialement vers l'extérieur en position de maintien. La pièce centrale 54 est fixée en son centre à l'extrémité supérieure d'un vérin rotatif 55 et est mobile en rotation avec celui-ci. Les autres parties du dispositif de maintien 50 sont portés par un plateau 56 muni de moyens de fixation dans la partie centrale du moule, par exemple à l'aide d'une partie filetée ou à l'une fixation à baïonnettes. Le dispositif de maintien 50 présente un axe de symétrie central qui est aligné sur l'axe central 30 du moule 10 lorsqu'il est mis en place au sein de ce dernier. Lors de l'actionnement du vérin rotatif 55, les doigts mobiles 52 sont entraînés via la pièce centrale 54 en un mouvement de rotation et tourne chacun autour d'un pivot 53 d'axe vertical, parallèle à l'axe central 30 et passent d'une première position de maintien, tel qu'illustré à la fig. 10, à une position de retrait, quand leur extrémité libre en tournant se trouve en retrait par rapport au diamètre intérieur du bourrelet qui correspond à celui extérieur des pièces fixes 57 du dispositif de maintien 50. La position de maintien peut être assurée par un ressort et le vérin peut être utilisé uniquement pour effectuer le déplacement en position de retrait des doigts mobiles ou alors le vérin actionne le déplacement en tournant dans deux sens de rotation contraires.

Comme l'illustrent les figures 2 à 9, l'invention est également relative à un procédé de cuisson d'une ébauche d'un pneumatique.

On éloigne axialement l'anneau inférieur 18b de la coquille inférieure 16b vers l'intérieur du moule 10, afin que le flanc inférieur de l'ébauche de pneumatique ne prenne pas appui sur la coquille inférieure (figure 2).

On éloigne radialement les secteurs 38 vers l'extérieur du moule de manière à pouvoir disposer ultérieurement les secteurs autour de l'ébauche de pneumatique (figure 3).

On introduit ensuite une ébauche de pneumatique dans le moule, le bourrelet inférieur de l'ébauche de pneumatique prenant appui sur l'anneau inférieur 18b qui se trouve toujours à l'écart de la coquille inférieure 16b.

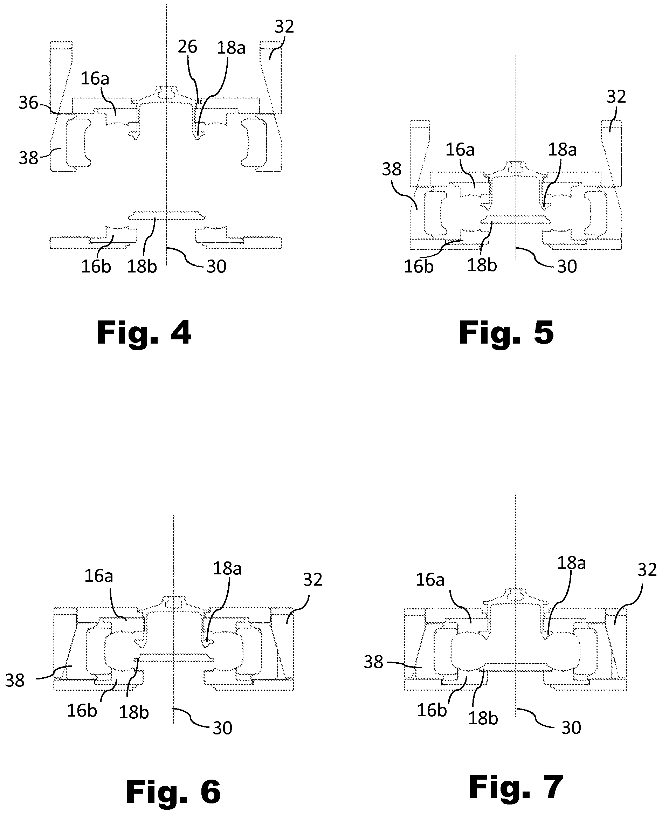

On éloigne axialement l'anneau supérieur 18a de la coquille supérieure 16a vers l'intérieur du moule, afin que le flanc supérieur de l'ébauche de pneumatique ne prenne pas appui sur la coquille supérieure, l'anneau supérieur prenant appui sur le bourrelet supérieur de l'ébauche de pneumatique (figure 4).

On rapproche axialement le couvercle 32 du bâti jusqu'à ce que les secteurs 38 prennent appui sur l'ensemble inférieur 14 (figure 5). On observe que les bourrelets supérieur 18a et inférieur 18b sont toujours écartés par rapport à leurs coquilles respectives : supérieure 16a et inférieure 16b.

On règle la pression de gaz à l'intérieur de l'ébauche de pneumatique, de préférence entre 0,05 bar et 5 bar, de sorte que les bourrelets de l'ébauche de pneumatique soient suffisamment plaqués contre les anneaux qui leur sont associés afin de former un contact étanche.

On règle également la pression de gaz à l'intérieur de l'ébauche de pneumatique, de préférence entre 0,05 bar et 5 bar, de sorte que les flancs de l'ébauche de pneumatique soient suffisamment rigides et galbés pour permettre aux coquilles de prendre appui dessus sans les racler ou les déformer.

On règle le débit de gaz sous pression, de préférence entre 1 l/s et 1000 l/s, de sorte que le débit de gaz soit suffisamment important pour permettre la mise sous pression rapide de l'ébauche de pneumatique, et ainsi, la formation du contact étanche pendant les phases de gonflage.

On alimente ensuite en gaz sous pression l'intérieur de l'ébauche de pneumatique de manière à mettre sous pression rapidement l'ébauche de pneumatique, et à former un contact étanche. Chaque bourrelet de l'ébauche de pneumatique est alors plaqué et en contact annulaire contre son anneau de moulage 18a, 18b et à l'écart des coquilles 16a, 16b (fig. 6).

Une fois que les anneaux 18a, 18b de chaque ensemble de moulage sont en contact étanche avec les bourrelets de l'ébauche de pneumatique qui leur sont associés, on rapproche axialement l'anneau inférieur 16b de la coquille inférieure 18b, et l'anneau supérieur 18a de la coquille supérieure 16a (figure 7) sous l'effet de la pression à l'intérieur de l'ébauche, tel qu'il sera expliqué dans ce qui suit.

Lorsqu'on rapproche axialement les anneaux des coquilles qui leur sont associés, il est nécessaire que la pression à l'intérieur de l'ébauche de pneumatique soit suffisante pour que le contact étanche entre les bourrelets de l'ébauche de pneumatique et leurs anneaux de moulage soit maintenus.

On prédéfinit alors une pression, de préférence entre 0,05 bar et 5 bar, permettant le maintien du contact étanche entre les bourrelets de l'ébauche de pneumatique et leurs anneaux de moulage.

La pression à l'intérieur de l'ébauche de pneumatique exerce un effort sur l'actionneur axial 22a, 22b de chaque ensemble, via l'anneau et le support central auxquels il est lié. Ainsi, à la pression à l'intérieur de l'ébauche de pneumatique correspond un effort s'exerçant sur l'actionneur axial.

On prédéfinit ainsi l'effort limite s'exerçant sur l'actionneur axial correspondant à la pression à l'intérieur de l'ébauche de pneumatique suffisante pour que le contact étanche entre les bourrelets de l'ébauche de pneumatique et leurs anneaux de moulage soit maintenus.

On règle les moyens de limitation de l'effort s'exerçant sur ledit actionneur à l'effort limite prédéfinie de sorte que, lorsque l'effort exercé par la pression à l'intérieur de l'ébauche de pneumatique sur l'actionneur axial est inférieur à un effort limite prédéfini du limiteur d'effort, l'actionneur axial est immobile, et, lorsque l'effort exercé par la pression à l'intérieur de l'ébauche de pneumatique sur l'actionneur axial est supérieur à l'effort limite prédéfini du limiteur d'effort, l'actionneur axial se ramasse axialement (fig. 7). C'est la position fermée du moule dans laquelle a lieu l'étape de cuisson du pneumatique.

A la fin de la cuisson, on réalise d'abord une purge du gaz sous pression qui a été utilisé pour réaliser la cuisson du pneumatique. Ensuite, tel que visible à la fig. 8, on soulève le plateau 32 qui se déplace axialement vers le haut avec la couronne conique ce qui a pour effet le déplacement radial vers l'extérieur des secteurs 38 Afin de pouvoir ouvrir complétement le moule, le pneumatique est retenu en appui sur la coquille inférieure 16b à l'aide des doigts mobiles du dispositif de maintien de la fig. 10.

On actionne ensuite les actionneurs 22a et 22b pour déplacer axialement les segments, ainsi que les coquilles et anneaux de moulage et extraire le pneumatique cuit (fig. 9).

Le moule est ensuite complètement ouvert et peu commencer un nouveau cycle de cuisson (fig. 2).

D'autres variantes et modes de réalisation de l'invention peuvent être envisagés sans sortir du cadre de ses revendications.

## Revendications

1. Moule de cuisson (10) d'une ébauche d'un pneumatique comprenant un ensemble supérieur (12) de moulage et un ensemble inférieur (14) de moulage, chaque ensemble de moulage comportant une coquille (16a, 16b) de moulage d'un flanc du pneumatique, un anneau (18a, 18b) de moulage d'un bourrelet du pneumatique, un support central (20a, 20b) mobile axialement sur lequel l'anneau est fixé, et un actionneur axial (22a, 22b) du support central,
le moule comprenant, en outre, une source de gaz sous pression apte à mettre sous pression l'ébauche de pneumatique dès que les bourrelets de l'ébauche de pneumatique sont sensiblement en contact avec leurs anneaux de moulage,
le moule étant **caractérisé en ce que** la source de gaz sous pression comporte des moyens de réglage de la pression à l'intérieur de l'ébauche de pneumatique, et **en ce que** l'actionneur axial (22a, 22b) comporte des moyens de limitation de l'effort s'exerçant sur ledit actionneur, de manière que, lorsque l'effort exercé par la pression à l'intérieur de l'ébauche de pneumatique sur l'actionneur axial (22a, 22b) est inférieur à un effort limite prédéfini, l'actionneur axial (22a, 22b) est immobile, et, lorsque l'effort exercé par la pression à l'intérieur de l'ébauche de pneumatique sur l'actionneur axial (22a, 22b) est supérieur à l'effort limite prédéfini, l'actionneur axial (22a, 22b) se ramasse axialement.

2. Moule selon la revendication 1, comprenant un couvercle (32) de l'ensemble supérieur (12) de moulage, la coquille supérieure (16a) de moulage d'un flanc du pneumatique et/ou l'anneau supérieur (18a) de moulage d'un bourrelet du pneumatique étant mobiles axialement par rapport au couvercle (32) sous l'effet de l'actionneur axial supérieur (22a) et/ou de la pression à l'intérieur de l'ébauche de pneumatique.

3. Moule selon l'une des revendications 1 à 2, dans lequel le support central supérieur (20a) et l'anneau supérieur (18a) de moulage d'un bourrelet du pneumatique sont monoblocs.

4. Moule selon l'une des revendications 1 à 3, dans lequel l'ensemble supérieur (12) comprend une couronne de secteurs (38) de moulage de la bande de roulement du pneumatique, chaque secteur étant relié au couvercle (32) et à la coquille supérieure (16a) de moulage d'un flanc du pneumatique de manière que, lorsque la coquille supérieure (16a) est mobile à rapprochement axial par rapport au couvercle (32), les secteurs (38) sont mobiles radialement vers l'intérieur du moule, et, lorsque la coquille supérieure (16a) est mobile à éloignement axial par rapport au couvercle (32), les secteurs (38) sont mobiles radialement vers l'extérieur du moule.

5. Moule selon l'une des revendications 1 à 4, dans lequel l'anneau (18a, 18b) de moulage d'un bourrelet du pneumatique d'un ensemble de moulage est mobile à coulissement axial par rapport la coquille (16a, 16b) de moulage d'un flanc du pneumatique dudit ensemble de moulage entre une butée axialement interne (24) de ladite coquille, et une butée axialement externe (26) de ladite coquille.

6. Moule selon l'une des revendications 2 à 5, dans lequel la coquille supérieure (16a) de moulage d'un flanc du pneumatique est mobile à coulissement axial par rapport au couvercle (32) entre une butée axialement interne (36) du couvercle (32), et une butée axialement externe (34) du couvercle (32).

7. Moule selon la revendication 6, dans lequel chaque secteur (38) est mobile à coulissement radial par rapport à la coquille supérieure (16a) de moulage d'un flanc du pneumatique entre une butée radialement interne (40) de la coquille supérieure (16a), et la butée axialement interne (36) du couvercle (32).

8. Moule selon l'une des revendications 1 à 7, comprenant des moyens électriques de chauffage (42) du gaz sous pression contenu à l'intérieur l'ébauche de pneumatique.

9. Moule selon l'une des revendications 1 à 8, comprenant des moyens de maintien en position axiale du bourrelet inférieur du pneumatique.

10. Procédé de cuisson d'une ébauche de pneumatique à l'aide d'un moule de cuisson (10) selon l'une des revendications 1 à 9, dans lequel on introduit une ébauche de pneumatique à l'intérieur du moule (10), on ferme le moule (10) sur l'ébauche de pneumatique afin de réaliser la cuisson de ladite ébauche, **caractérisé en ce qu'**on règle la pression du gaz à l'intérieur de l'ébauche de pneumatique à l'aide des moyens de réglage de la pression à l'intérieur de l'ébauche de pneumatique, et on règle un effort limite s'exerçant sur l'actionneur axial (22a, 22b) à l'aide des moyens de limitation de l'effort s'exerçant sur ledit actionneur de manière que, en phase de cuisson sous pression de l'ébauche, lorsque l'effort exercé par la pression à l'intérieur de l'ébauche de pneumatique sur l'actionneur axial (22a, 22b) est inférieur à l'effort limite prédéfini, l'actionneur axial (22a, 22b) est immobile, et, lorsque l'effort exercé par la pression à l'intérieur de l'ébauche de pneumatique sur l'actionneur axial (22a, 22b) est supérieur à l'effort limite prédéfini, l'actionneur axial (22a, 22b) se ramasse axialement.

## Patentansprüche

1. Vulkanisationsform (10) für einen Reifenrohling, umfassend eine obere Formbaugruppe (12) und eine untere Formbaugruppe (14), wobei jede Formbaugruppe eine Schale (16a, 16b) zum Formen einer Seitenwand des Reifens, einen Ring (18a, 18b) zum Formen eines Wulstes des Reifens, einen axial beweglichen zentralen Träger (20a, 20b), an dem der Ring befestigt ist, und einen axialen Aktuator (22a, 22b) des zentralen Trägers umfasst,
wobei die Form ferner eine Druckgasquelle umfasst, die in der Lage ist, den Reifenrohling unter Druck zu setzen, sobald die Wülste des Reifenrohlings im Wesentlichen in Kontakt mit ihren Formungsringen sind,
wobei die Form **dadurch gekennzeichnet ist, dass** die Druckgasquelle Mittel zum Einstellen des Drucks im Inneren des Reifenrohlings umfasst und dass der axiale Aktuator (22a, 22b) Mittel zum Begrenzen der auf den Aktuator ausgeübten Kraft umfasst, so dass, wenn die durch den Druck im Inneren des Reifenrohlings auf den axialen Aktuator (22a, 22b) ausgeübte Kraft kleiner als eine vordefinierte Grenzkraft ist, der axiale Aktuator (22a, 22b) unbeweglich ist, und wenn die durch den Druck im Inneren des Reifenrohlings auf den axialen Aktuator (22a, 22b) ausgeübte Kraft größer als die vordefinierte Grenzkraft ist, der axiale Aktuator (22a, 22b) sich axial zusammenzieht.

2. Form nach Anspruch 1, die eine Abdeckung (32) der oberen Formbaugruppe (12) umfasst, wobei die obere Schale (16a) zum Formen einer Seitenwand des Reifens und/oder der obere Ring (18a) zum Formen eines Wulstes des Reifens unter der Wirkung des oberen axialen Aktuators (22a) und/oder des Drucks im Inneren des Reifenrohlings in Bezug auf die Abdeckung (32) axial beweglich sind.

3. Form nach einem der Ansprüche 1 bis 2, wobei der obere zentrale Träger (20a) und der obere Ring (18a) zum Formen eines Wulstes des Reifens einstückig sind.

4. Form nach einem der Ansprüche 1 bis 3, wobei die obere Baugruppe (12) einen Kranz aus Sektoren (38) zum Formen des Laufstreifens des Reifens umfasst, wobei jeder Sektor mit der Abdeckung (32) und mit der oberen Schale (16a) zum Formen einer Seitenwand des Reifens verbunden ist, so dass, wenn sich die obere Schale (16a) axial auf die Abdeckung (32) zubewegt, die Sektoren (38) radial nach innerhalb der Form beweglich sind, und wenn sich die obere Schale (16a) axial von der Abdeckung (32) wegbewegt, die Sektoren (38) radial nach außerhalb der Form beweglich sind.

5. Form nach einem der Ansprüche 1 bis 4, wobei der Ring (18a, 18b) zum Formen eines Wulstes des Reifens einer Formbaugruppe in Bezug auf die Schale (16a, 16b) zum Formen einer Seitenwand des Reifens der Formbaugruppe zwischen einem axial inneren Anschlag (24) der Schale und einem axial äußeren Anschlag (26) der Schale axial verschiebbar ist.

6. Form nach einem der Ansprüche 2 bis 5, wobei die obere Schale (16a) zum Formen einer Seitenwand des Reifens in Bezug auf die Abdeckung (32) zwischen einem axial inneren Anschlag (36) der Abdeckung (32) und einem axial äußeren Anschlag (34) der Abdeckung (32) axial verschiebbar ist.

7. Form nach Anspruch 6, wobei jeder Sektor (38) in Bezug auf die obere Schale (16a) zum Formen einer Seitenwand des Reifens zwischen einem radial inneren Anschlag (40) der oberen Schale (16a) und dem axial inneren Anschlag (36) der Abdeckung (32) radial verschiebbar ist.

8. Form nach einem der Ansprüche 1 bis 7, umfassend elektrische Mittel (42) zum Erwärmen des im Inneren des Reifenrohlings enthaltenen Druckgases.

9. Form nach einem der Ansprüche 1 bis 8, umfassend Mittel zum Halten des unteren Wulstes des Reifens in axialer Position.

10. Verfahren zum Vulkanisieren eines Reifenrohlings mithilfe einer Vulkanisationsform (10) nach einem der Ansprüche 1 bis 9, wobei ein Reifenrohling in die Form (10) eingeführt wird, die Form (10) über dem Reifenrohling geschlossen wird, um das Vulkanisieren des Reifenrohlings durchzuführen, **dadurch gekennzeichnet, dass** der Druck des Gases im Inneren des Reifenrohlings mithilfe der Mittel zum Einstellen des Drucks im Inneren des Reifenrohlings eingestellt wird und eine auf den axialen Aktuator (22a, 22b) ausgeübte Grenzkraft mithilfe der Mittel zur Begrenzung der auf den Aktor ausgeübten Kraft so eingestellt wird, dass in der Phase des Vulkanisierens des Rohlings unter Druck, wenn die durch den Druck im Inneren des Reifenrohlings auf den axialen Aktuator (22a, 22b) ausgeübte Kraft kleiner als eine vordefinierte Grenzkraft ist, der axiale Aktuator (22a, 22b) unbeweglich ist, und wenn die durch den Druck im Inneren des Reifenrohlings auf den axialen Aktuator (22a, 22b) ausgeübte Kraft größer als die vordefinierte Grenzkraft ist, der axiale Aktuator (22a, 22b) sich axial zusammenzieht.

## Claims

1. Mould (10) for curing a green tyre, comprising an upper moulding assembly (12) and a lower moulding assembly (14), each moulding assembly comprising a shell (16a, 16b) for moulding one sidewall of the tyre, a ring (18a, 18b) for moulding a bead of the tyre, an axially mobile central support (20a, 20b) on which the ring is fixed, and an axial actuator (22a, 22b) of the central support,
the mould further comprising a source of pressurized gas able to pressurize the green tyre as soon as the beads of the green tyre are substantially in contact with their moulding rings,
the mould being **characterized in that** the source of pressurized gas comprises means for regulating the pressure inside the green tyre, and **in that** the axial actuator (22a, 22b) comprises means for limiting the load exerted on said actuator so that when the load exerted by the pressure inside the green tyre on the axial actuator (22a, 22b) is below a predefined limit load, the axial actuator (22a, 22b) is immobile, and when the load exerted by the pressure inside the green tyre on the axial actuator (22a, 22b) is above the predefined limit load, the axial actuator (22a, 22b) is axially collapsed.

2. The mould according to Claim 1, comprising a cover (32) of the upper moulding assembly (12), the upper shell (16a) for moulding one sidewall of the tyre and/or the upper ring (18a) for moulding a bead of the tyre being able to move axially relative to the cover (32) under the effect of the upper axial actuator (22a) and/or of the pressure inside the green tyre.

3. The mould according to one of Claims 1 to 2, wherein the upper central support (20a) and the upper ring (18a) for moulding a bead of the tyre are of one piece.

4. Mould according to one of Claims 1 to 3, wherein the upper assembly (12) comprises a ring of segments (38) for moulding the tread of the tyre, each segment being connected to the cover (32) and to the upper shell (16a) for moulding a sidewall of the tyre so that, when the upper shell (16a) is able to move axially closer towards the cover (32), the segments (38) are able to move radially towards the inside of the mould, and when the upper shell (16a) is able to move axially away from the cover (32), the segments (38) are able to move radially towards the outside of the mould.

5. Mould according to one of Claims 1 to 4, wherein the ring (18a, 18b) for moulding a bead of the tyre of one moulding assembly is able to move in axial sliding relative to the shell (16a, 16b) for moulding a sidewall of the tyre of said moulding assembly between an axially inner end stop (24) of said shell, and an axially outer end stop (26) of said shell.

6. Mould according to one of Claims 2 to 5, wherein the upper shell (16a) for moulding a sidewall of the tyre is able to move in axial sliding relative to the cover (32) between an axially inner end stop (36) of the cover (32), and an axially outer end stop (34) of the cover (32).

7. Mould according to Claim 6, wherein each segment (38) is able to move in radial sliding relative to the upper shell (16a) for moulding a sidewall of the tyre between a radially inner end stop (40) of the upper shell (16a), and the axially inner end stop (36) of the cover (32).

8. Mould according to one of Claims 1 to 7, comprising electric heating means (42) for heating the pressurized gas contained inside the green tyre.

9. Mould according to one of Claims 1 to 8, comprising retaining means keeping the lower bead of the tyre axially in position.

10. Method for curing a green tyre using a curing mould (10) according to one of Claims 1 to 9, wherein a green tyre is introduced into the mould (10), the mould (10) is closed onto the green tyre so as to cure said green tyre, **characterized in that** the pressure of the gas inside the green tyre is regulated using the means for regulating the pressure inside the green tyre, and a limit load exerted on the axial actuator (22a, 22b) is regulated using the means for limiting the load exerted on said actuator so that, in the phase in which the green tyre is being cured under pressure, when the load exerted by the pressure inside the green tyre on the axial actuator (22a, 22b) is below the predefined limit load, the axial actuator (22a, 22b) is immobile, and when the load exerted by the pressure inside the green tyre on the axial actuator (22a, 22b) is above the predefined limit load, the axial actuator (22a, 22b) is axially collapsed.
